# FASCICULE DE BREVET EUROPEEN

(11) **EP 1 449 067 B1**
(45) Date de publication et mention de la délivrance du brevet: **12.12.2007**
(21) Numéro de dépôt: 02795335.5
(22) Date de dépôt: 24.10.2002
(51) Int. Cl.: G06F 7/58

(54) **SECURISATION D'UN GENERATEUR PSEUDO-ALEATOIRE**
SICHERUNG EINES PSEUDOZUFALLSGENERATORS
METHOD AND SYSTEM FOR MAKING SECURE A PSEUDO-RANDOM GENERATOR

(30) Priorité: 15.11.2001 FR 0114785
(43) Date de publication de la demande: 25.08.2004
(73) Titulaire: Everbee Networks, 75002 Paris (FR)
(72) Inventeur: STEHLE, Jean-Luc, F-75015 Paris (FR)
(74) Mandataire: Grynwald, Albert
(86) Numéro de dépôt international: PCT/FR2002/003652
(87) Numéro de publication internationale: WO 2003/042812

(56) Documents cités:
- EP-A- 0 095 272
- EP-A- 0 782 069
- US-A- 4 839 841
- US-B1- 6 253 223

## Description

Diverses applications nécessitent l'utilisation de nombres tirés au hasard, appelés ci-après nombres aléatoires. Ces nombres aléatoires sont utilisés entre autres dans des applications liées à la sécurité informatique. Ils servent en particulier à générer à la volée des clés de cryptage, par exemple dans le schéma de Diffie Hellman utilisé dans le protocole IPSEC.

Toute la sécurité des transmissions utilisant de tels protocoles repose sur la qualité du générateur de nombres aléatoires. Un générateur de nombres aléatoires fournit des suites d'octets qui doivent vérifier plusieurs caractéristiques. Tout d'abord, ces suites d'octets doivent être statistiquement aléatoires : tous les octets tirés devront être équiprobables. Cela signifie qu'en moyenne, il devra y avoir autant de 1 que de 2, que de 3, etc., et il devra en être de même pour toutes les paires d'octets, pour tous les triplets d'octets, quadruplets d'octets, et ainsi de suite. Plus généralement, une telle suite d'octets aléatoires devra avoir certaines propriétés mathématiques et statistiques bien connues et décrites, par exemple, dans l'ouvrage de Donald Knuth, The art of Computer Programming, volume 2: Seminumerical Algorithms, troisième édition pages 1 à 193, et, en particulier, pages 149 à 183. Indépendamment de ces propriétés mathématiques et statistiques, les nombres aléatoires devront être imprédictibles en pratique. Entre autres, la connaissance des nombres préalablement tirés ne doit fournir à un éventuel pirate aucune information lui permettant de deviner que telle séquence pourrait avoir plus de chances d'être tirée que telle autre.

On distingue deux grandes familles de générateurs aléatoires.

La première famille regroupe les générateurs dits physiques. Ceux-ci reposent sur un phénomène physique considéré comme aléatoire. Ce phénomène pourra être par exemple le bruit de fond d'un circuit électronique, l'analyse d'un trafic sur un réseau informatique ou le résultat de calculs divers, entre autres d'algorithmes de hachage, sur le contenu de la mémoire vive d'un ordinateur. Les générateurs physiques peuvent être utilisés pour générer à la volée des clés de cryptage, mais ils sont non reproductibles et, en particulier, ils ne peuvent pas servir directement à générer un masque de cryptage.

Par ailleurs l'utilisation de générateurs physiques basés sur un phénomène physique considéré comme parfaitement aléatoire peut poser quelques problèmes pratiques. Le recueil du bruit de fond d'un élément de circuit électronique nécessite un dispositif électronique onéreux et encombrant pour amplifier ce bruit de fond et s'en servir pour construire des octets vérifiant les propriétés statistiques requises. L'analyse du trafic d'un réseau informatique est susceptible d'introduire des failles de sécurité dans la mesure où un pirate pourrait analyser le même trafic, ce qui lui permettrait d'avoir des informations sur les clés de cryptage. Il en est de même si on utilise des algorithmes de hachage appliqués au contenu de certaines mémoires informatiques, car si un pirate peut accéder à ces mémoires, il pourra en déduire les mêmes nombres aléatoires mettant ainsi à mal la sécurité du système.

La seconde famille regroupe des générateurs connus sous le nom de générateurs pseudo-aléatoires. Ces derniers reposent sur un algorithme mathématique exécuté sur un équipement informatique et peuvent être réalisés soit de manière purement logicielle, soit sur un coprocesseur spécifique. Un générateur pseudo-aléatoire est, au sens mathématique du terme, un automate fini, entièrement déterministe. Pour cette raison les nombres générés par un générateur pseudo-aléatoire sont souvent appelés des nombres pseudo-aléatoires. La suite des nombres pseudo-aléatoires générés dépend de l'état de l'automate, représenté en pratique par un certain nombre de bits appelés ci-après les bits d'état du générateur pseudo-aléatoire. Ces bits d'état sont stockés dans une zone mémoire appelée ci-après première zone mémoire. A chaque tirage d'un nombre pseudo-aléatoire, le générateur pseudo-aléatoire lit la valeur de ses bits d'état, et effectue, à partir de ces valeurs, des calculs dont les résultats permettront, d'une part, de fournir le nombre pseudo-aléatoire recherché et, d'autre part, de fournir de nouvelles valeurs des bits d'état, qui remplaceront les anciennes valeurs de ces bits d'état. Le générateur pseudo-aléatoire sera alors prêt pour le tirage suivant.

Nous nous intéresserons par la suite uniquement aux générateurs pseudo-aléatoires.

L'utilisation des générateurs pseudo-aléatoires pose divers problèmes de sécurité. En effet, une information, même partielle, sur les bits d'état du générateur pseudo-aléatoire permet de prévoir que, parmi les suites de nombres pseudo-aléatoires qui vont être tirées, certaines suites seront plus probables que d'autres, et cette information peut aussi permettre de connaître ces suites plus probables. Une telle information pourrait donc fournir à un éventuel pirate des armes pour attaquer le système informatique. Dans le cas où les bits d'état sont totalement connus, il est possible de prévoir avec certitude tous les nombres pseudo-aléatoires qui vont être tirés par la suite, ce qui rend illusoire toute utilisation de ce générateur pseudo-aléatoire pour des applications visant à sécuriser un système informatique.

Dans de nombreux générateurs pseudo-aléatoires il est possible, à partir de l'historique des tirages précédemment effectués, de remonter à l'état interne du générateur, donc de déterminer la valeur des bits d'état. On peut alors déterminer avec certitude les résultats de tous les tirages futurs. Même si l'historique ne donne qu'une information partielle, cela permettra de déterminer que certaines configurations des bits d'état sont plus probables que d'autres, et de calculer lesquelles, donc de prévoir que certaines séquences de nombres pseudo-aléatoires seront plus probables que d'autres. Bien évidemment de tels générateurs ne doivent jamais être utilisés pour des applications de sécurité informatique.

D'autres générateurs pseudo-aléatoires sont basés sur des algorithmes mathématiques plus sophistiqués qui ne permettent pas, à partir de l'historique de tirages passés, de remonter à l'état interne du générateur pseudo-aléatoire. Néanmoins d'autres types d'attaques sont possibles.

L'une des attaques possibles consiste à prendre connaissance de l'état interne du générateur pseudo-aléatoire en lisant la zone mémoire qui le contient, ou, ce qui aboutit au même résultat, à écrire dans cette zone mémoire une valeur spécifiée par l'attaquant. Ceci est possible de diverses façons, et en particulier à l'aide de virus ou de chevaux de Troie infectant un poste de travail connecté à un réseau informatique.

Une autre attaque est l'attaque par réinitialisation. Lorsqu'on met sous tension un système informatique, la mémoire vive se retrouve en général dans un état donné (tous les bits à 0 ou tous les bits à 1), et on peut donc connaître l'état interne du générateur pseudo-aléatoire. Si un attaquant peut provoquer une brève coupure de courant, il peut donc connaître l'état interne du générateur pseudo-aléatoire lors de la remise sous tension et il lui est alors possible de prévoir tous les états internes futurs, donc tous les nombres pseudo-aléatoires qui vont être générés.

Un autre problème lié à l'utilisation des générateurs pseudo-aléatoires provient de ce qu'ils sont, en général, implémentés par logiciel. Lorsqu'une application a besoin d'un nombre aléatoire, elle lance une routine qui va faire fonctionner le générateur pseudo-aléatoire. Cette routine consiste à consulter l'état du générateur puis à faire un calcul qui, d'une part, modifie cet état et, d'autre part, renvoie le nombre pseudo-aléatoire souhaité. Cela signifie que le générateur pseudo-aléatoire ne fonctionne que si l'on s'en sert. Plus précisément, cela signifie qu'il y a eu un nombre relativement petit de tirages aléatoires effectivement réalisés depuis la mise sous tension du système et le pirate n'aura qu'un petit nombre de clés à tester pour casser le système. Si ce nombre de clés est de quelques millions ou de quelques milliards, il suffit de peu de temps à un micro-ordinateur pour les tester toutes.

Un générateur pseudo-aléatoire est souvent considérablement moins coûteux à réaliser qu'un générateur physique. Si la réalisation est purement logicielle, le coût est négligeable. Même en cas de réalisation matérielle, un coprocesseur de faible puissance est suffisant car les algorithmes à mettre en oeuvre sont simples et le stockage de l'état interne du générateur, c'est-à-dire des bits d'état, occupe très peu de mémoire. Un générateur pseudo-aléatoire peut être implémenté au sein d'un circuit intégré sur une « puce » en silicium et il occupera alors une place minime et représentera un surcoût négligeable par rapport au coût de conception, de développement et de fabrication du circuit intégré.

L'invention décrite ici, objet du présent brevet, concerne un procédé et un système pour sécuriser des générateurs pseudo-aléatoires, permettant ainsi de les utiliser en palliant aux divers inconvénients décrits ci-dessus. Elle permet de réaliser des générateurs pseudo-aléatoires ayant toutes les qualités requises, entre autres pour des applications liées à la sécurité informatique, cette réalisation étant possible à un coût significativement plus faible que celui d'un générateur aléatoire physique. L'invention peut être utilisée pour n'importe quel type de générateur pseudo-aléatoire, indépendamment de l'algorithme mathématique utilisé, pourvu que cet algorithme soit suffisamment sophistiqué pour empêcher que la connaissance de l'historique des tirages passés puisse donner une quelconque information sur l'état interne du générateur.

Les documents US-A-6 253 223 et EP-A-0 782 069 décrivent chacun des générateurs de nombres pseudo aléatoires comme spécifiés dans le préambule des revendications indépendantes 1 et 6. Un aspect de l'invention est un procédé tel que défini dans la revendication indépendante 1. Le système de la revendication indépendante 6 en défini un autre. Divers modes de réalisation sont spécifiés dans les revendications dépendantes attenantes.

L'invention concerne un procédé pour sécuriser un générateur générant des nombres pseudo-aléatoires.

Le générateur est caractérisé par un état interne. Le générateur comprend :
- une première zone mémoire contenant des bits d'état, représentant l'état interne du générateur,
- une unité de calcul effectuant des opérations arithmétiques sur les bits d'état pour produire les nombres pseudo-aléatoires et modifier les bits d'état,
- une seconde zone mémoire contenant les nombres pseudo-aléatoires,
- une sortie unique permettant de lire les nombres pseudo-aléatoires contenus dans la seconde zone mémoire.

Le procédé selon l'invention comprend l'étape d'inhiber de manière irréversible et inconditionnelle, notamment par des moyens logiques et/ou mécaniques et/ou électroniques, la lecture et l'écriture des bits d'état depuis l'extérieur du générateur, y compris via la sortie unique.

De préférence, selon l'invention le procédé est plus particulièrement destiné à sécuriser un générateur. Le générateur comprend en outre des premiers moyens de calcul comportant un opérateur XOR et ayant une entrée unique permettant d'entrer des données provenant d'une source extérieure au générateur. Le procédé comprend l'étape, pour les premiers moyens de calcul, de modifier l'état des bits d'état en mettant en oeuvre l'opérateur XOR entre les données et au moins une partie des bits d'état.

Il résulte de la combinaison des traits techniques que la valeur des bits d'état ne peut être déduite de la connaissance des données.

De préférence, selon l'invention le générateur produit en permanence des nombres pseudo-aléatoires pour les besoins d'un système informatique et mémorise dans la seconde zone mémoire le dernier nombre pseudo-aléatoire produit en le substituant au nombre pseudo-aléatoire précédent.

Le procédé comprend l'étape, pour le système informatique, de lire par intermittence dans la seconde zone mémoire, via la sortie unique, les nombres pseudo-aléatoires de manière asynchrone par rapport à leur production.

Il résulte de la combinaison des traits techniques que le caractère aléatoire et imprévisible des nombres pseudo-aléatoires utilisés par le système informatique est accentué.

Dans le cas d'une autre variante de réalisation de l'invention le générateur produit des nombres pseudo-aléatoires pour les besoins d'un système informatique. Dans le cas de cette variante de réalisation, le procédé comprend en outre un algorithme mis en oeuvre, par intermittence, par le système informatique. L'algorithme comporte les étapes suivantes :
- l'étape de lire une partie des nombres pseudo-aléatoires produits par le générateur pour constituer une suite d'arguments,
- l'étape de calculer une suite de bits de perturbation en exécutant des opérations arithmétiques sur les arguments,
- l'étape de modifier les bits d'état en mettant en oeuvre l'opérateur XOR entre la suite de bits de perturbation et au moins une partie des bits d'état.

De préférence, dans le cas de cette variante de réalisation selon l'invention, le procédé est tel que pour calculer la suite de bits de perturbation :
- on spécifie une clé de cryptage, notamment au moyen d'une partie des arguments,
- on spécifie une suite de nombres à crypter, notamment au moyen d'une partie des arguments,
- on met en oeuvre un algorithme de cryptage pour produire, au moyen de la clé de cryptage et de la suite de nombres à crypter, la suite de bits de perturbation.

Selon l'invention le générateur est lui-même constitué de plusieurs générateurs pseudo-aléatoires élémentaires, d'un registre d'adressage et d'une troisième zone mémoire. Chacun des générateurs pseudo-aléatoires élémentaires comprend ses propres bits d'état dénommés bits d'états élémentaires. Les bits d'état du générateur, contenus dans la première zone mémoire du générateur, sont constitués par la réunion du registre d'adressage, de la troisième zone mémoire et des bits d'état élémentaires.

Le procédé selon l'invention est caractérisé en ce que la génération des nombres pseudo-aléatoires par le générateur comprend les étapes suivantes :
- l'étape d'extraire du registre d'adressage des informations permettant de spécifier, parmi les générateurs pseudo-aléatoires élémentaires, lequel d'entre eux sera utilisé lors de la prochaine itération du procédé,
- l'étape de faire fonctionner le générateur pseudo-aléatoire élémentaire spécifié à l'étape précédente pour en extraire un nombre ci-après dénommé le nombre candidat,
- l'étape d'extraire d'une partie des bits du registre d'adressage et d'une partie des bits du nombre candidat des informations permettant de spécifier une adresse dans la troisième zone mémoire,
- l'étape de lire dans la troisième zone mémoire le contenu de l'adresse spécifiée à l'étape précédente pour fournir les nombres pseudo-aléatoires,
- l'étape de stocker à l'adresse précédemment spécifiée dans la troisième zone mémoire une partie des bits du nombre candidat,
- l'étape d'utiliser une partie des bits du nombre candidat pour modifier le registre d'adressage.

L'invention concerne un système pour sécuriser un générateur générant des nombres pseudo-aléatoires. Le générateur est caractérisé par un état interne. Le générateur comprend :
- une première zone mémoire contenant des bits d'état, représentant l'état interne du générateur,
- une unité de calcul effectuant des opérations arithmétiques sur les bits d'état pour produire les nombres pseudo-aléatoires et modifier les bits d'état,
- des moyens de mémorisation pour mémoriser les nombres pseudo-aléatoires dans une seconde zone mémoire,
- une sortie unique permettant de lire les nombres pseudo-aléatoires contenus dans la seconde zone mémoire.

Le système comprend des moyens d'inhibition pour inhiber de manière irréversible et inconditionnelle, notamment par des moyens logiques et/ou mécaniques et/ou électroniques, la lecture et l'écriture des bits d'état depuis l'extérieur du générateur, y compris via la sortie unique.

De préférence, selon l'invention le générateur comprend en outre des premiers moyens de calcul comportant un opérateur XOR. Les premiers moyens de calcul ont une entrée unique permettant d'entrer des données provenant d'une source extérieure au générateur. Les premiers moyens de calcul permettent de modifier l'état des bits d'état en mettant en oeuvre l'opérateur XOR entre les données et au moins une partie des bits d'état. Il résulte de la combinaison des traits techniques que la valeur des bits d'état ne peut être déduite de la connaissance des données.

De préférence, selon l'invention le système comprend un système informatique. Le générateur produit en permanence des nombres pseudo-aléatoires pour les besoins du système informatique.

Les moyens de mémorisation mémorisent dans la seconde zone mémoire le dernier nombre pseudo-aléatoire produit et substituent ce dernier nombre pseudo-aléatoire au nombre pseudo-aléatoire précédent. Le système informatique comprend des moyens de lecture connectés à la sortie unique pour lire par intermittence dans la seconde zone mémoire, via la sortie unique, les nombres pseudo-aléatoires de manière asynchrone par rapport à leur production.

Il résulte de la combinaison des traits techniques que le caractère aléatoire et imprévisible des nombres pseudo-aléatoires utilisés par le système informatique est accentué.

De préférence, dans le cas d'une variante de réalisation de l'invention le système comprend un système informatique. Le générateur produit des nombres pseudo-aléatoires pour les besoins du système informatique. Le système informatique comprend en outre des moyens de traitement informatique mis en oeuvre par intermittence. Les moyens de traitement informatique comprennent :
- des moyens de lecture connectés à la sortie unique pour lire une partie des nombres pseudo-aléatoires et pour constituer une suite d'arguments,
- des seconds moyens de calcul pour calculer une suite de bits de perturbation en exécutant des opérations arithmétiques sur les arguments,
- des moyens de transmission pour transmettre les bits de perturbation aux premiers moyens de calcul via la dite entrée unique.

Les premiers moyens de calcul permettent de modifier les bits d'état en mettant en oeuvre un opérateur XOR entre la suite de bits de perturbation et au moins une partie des bits d'état.

De préférence, dans le cas de cette variante de réalisation selon l'invention, les seconds moyens de calcul calculent la suite de bits de perturbation :
- en spécifiant une clé de cryptage, notamment au moyen d'une partie des arguments,
- en spécifiant une suite de nombres à crypter, notamment au moyen d'une partie des arguments,
- en mettant en oeuvre des moyens de cryptage pour produire au moyen de la clé de cryptage et de la suite de nombres à crypter, la suite de bits de perturbation.

Selon l'invention, le générateur comprend plusieurs générateurs pseudo-aléatoires élémentaires, un registre d'adressage et une troisième zone mémoire. Chacun des générateurs pseudo-aléatoires élémentaires comprend ses propres bits d'état dénommés bits d'états élémentaires. Les bits d'état contenus dans la première zone mémoire du générateur sont constitués par la réunion du registre d'adressage, de la troisième zone mémoire et des bits d'état élémentaires.

Le générateur comprend en outre des moyens de traitements informatiques permettant :
- d'extraire du registre d'adressage des informations permettant de spécifier, parmi les générateurs pseudo-aléatoires élémentaires, un générateur pseudo-aléatoire particulier,
- de faire fonctionner un générateur pseudo-aléatoire particulier pour fournir le nombre candidat,
- d'extraire d'une partie des bits du registre d'adressage et d'une partie des bits du nombre candidat, des informations permettant de spécifier une adresse dans la troisième zone mémoire,
- de lire dans la troisième zone mémoire le contenu de l'adresse, spécifiée à l'étape précédente, pour fournir des nombres pseudo-aléatoires,
- de stocker à l'adresse précédemment spécifiée dans la troisième zone mémoire une partie des bits du nombre candidat,
- d'utiliser une partie des bits du nombre candidat pour modifier le registre d'adressage.

L'invention décrite concerne donc un générateur pseudo-aléatoire qui est implémenté de telle sorte qu'il soit impossible d'avoir, depuis l'extérieur, une quelconque information sur les bits d'état c'est-à-dire sur l'état interne du générateur. Ces bits d'état sont stockés dans une première zone mémoire du générateur. De préférence, dans un mode particulier de réalisation de l'invention, le générateur utilisera un processeur dédicacé, utilisant une première zone mémoire qui n'est accessible que par lui seul. Dans ce mode particulier de réalisation le processeur dédicacé et cette première zone mémoire sont physiquement dans un dispositif matériel particulier de type circuit intégré en silicium ou « puce » d'une carte à puce, et ils occuperont tout ou partie de ce dispositif matériel.

Pour augmenter le caractère aléatoire de ce générateur, on le perturbe à intervalles non réguliers par des informations dites informations de perturbation et provenant d'une source extérieure. Cette perturbation consiste à modifier les bits d'état du générateur, contenus dans la première zone mémoire, sans que la connaissance des informations de perturbation puisse apporter une quelconque information sur la valeur des bits d'état, ni avant ni après la perturbation. Pour réaliser cette modification, on utilise un opérateur XOR appliqué entre au moins une partie des bits d'états et les bits de l'information de perturbation. Cette modification par opérateur XOR fonctionne de la manière suivante : pour chacun des bits d'état que l'on souhaite perturber, on consulte un bit dans les informations de perturbation, bit qu'on appellera bit de perturbation. Si le bit de perturbation est à 1, on retourne le bit d'état c'est-à-dire on remplace 0 par 1 et 1 par 0. Si le bit de perturbation est à 1, on ne modifie pas le bit d'état. L'intérêt d'une telle perturbation est qu'il n'y a aucun moyen depuis l'extérieur de connaître la valeur des bits d'état, ni avant, ni après la perturbation. Plus généralement, il est toujours impossible, depuis l'extérieur, d'accéder à quelque information que ce soit concernant le contenu de la première zone mémoire.

L'utilisation d'un générateur pseudo-aléatoire utilisant un processeur spécifique présente un autre avantage. Nous avons vu précédemment que si le générateur ne tourne qu'au fur et à mesure des besoins du système qui l'utilise, il n'y aura eu, en général, qu'un petit nombre de tirages aléatoires effectués depuis la mise sous tension du système. Or même si ce nombre est de l'ordre de plusieurs milliards, cela permet une attaque facile si ces nombres pseudo-aléatoires sont utilisés pour des applications de sécurisation d'un système informatique. Une parade est de faire fonctionner le générateur pseudo-aléatoire en permanence, même si on ne l'utilise pas. Néanmoins une telle solution n'est pas toujours possible, car elle consomme des ressources informatiques dans le système utilisateur, ce qui peut être rédhibitoire dans certains cas. Si, par contre, le générateur pseudo-aléatoire possède son propre processeur, il peut tourner en permanence, et de façon totalement asynchrone par rapport à l'utilisation des nombres pseudo-aléatoires au fur et à mesure des besoins du système utilisateur, et ce, sans consommer aucune ressource informatique du système utilisateur.

Dans ce mode de réalisation, le générateur écrit les nombres pseudo-aléatoires successifs dans une seconde zone mémoire, les nombres pseudo-aléatoires nouvellement calculés venant remplacer les nombres pseudo-aléatoires précédemment stockés dans cette seconde zone mémoire. Le système informatique utilisant les résultats du générateur pseudo-aléatoire lira, au fur et à mesure de ses besoins, les nombres stockés dans cette seconde zone mémoire. Il recueillera donc les nombres pseudo-aléatoires qui viennent d'être calculés. Les nombres pseudo-aléatoires plus anciens seront effacés au fur et à mesure du calcul de nouveaux nombres pseudo-aléatoires.

De même qu'on peut recourir à une source extérieure pour perturber, à intervalles non réguliers, les bits du générateur aléatoire, on peut, dans une variante de réalisation de l'invention, calculer les informations de perturbation à partir des nombres pseudo-aléatoires eux-mêmes, tels que fournis par le générateur. Pour ce faire, à intervalles non réguliers, et de façon asynchrone par rapport à la lecture des nombres par le système utilisateur, on lira des nombres pseudo-aléatoires fournis par le générateur pseudo-aléatoire et stockés dans la seconde zone mémoire, puis on appliquera des opérations arithmétiques sur ces nombres pseudo-aléatoires en vue de fournir des informations de perturbation destinées à perturber les bits d'état du générateur pseudo-aléatoire.

Dans une variante particulière de réalisation ces opérations arithmétiques feront appel à un algorithme de cryptage. Dans cette variante particulière de réalisation, certains des nombres pseudo-aléatoires permettront de déterminer une clé de cryptage, d'autres un nombre à crypter, le résultat de cet algorithme de cryptage constituant les bits de perturbation. De préférence, on utilisera un algorithme de cryptage comme le DES (Data Encryption Standard, adopté comme par les autorités américaines le 23 novembre 1976), dont les propriétés statistiques assurent un caractère aléatoire aux informations de perturbations ainsi calculées.

A titre d'exemple purement illustratif et non limitatif, nous décrivons ci-après, un mode particulier de réalisation de l'invention.

Ce mode de réalisation est basé sur le générateur pseudo-aléatoire qui avait été proposé comme standard par Park et Miller (Communications of the ACM 1988) après avoir été primitivement proposé par Lewis, Goodman et Miller en 1969 et, entre autres, implémenté par IBM (par exemple dans le langage APL) dans les années 1970.

Dans ce générateur pseudo-aléatoire de Park et Miller, un « germe » g compris entre 1 et 2^31-2 (a^b désigne le nombre a élevé à la puissance b, c'est-à-dire le produit de b nombres égaux à a) sert à calculer le nombre pseudo-aléatoire. A chaque utilisation du générateur (donc à chaque fois qu'un nombre pseudo-aléatoire est fourni) le germe g est multiplié par 7^5 = 16 807 et on en prend le reste modulo le nombre de Mersenne 2^31 - 1 = 2 147 483 647 (qui est un nombre premier). L'état interne du générateur de Park et Miller est défini par le nombre g, et les bits d'état sont les 31 bits constituant ce nombre g.

Le générateur pseudo-aléatoire de Park et Miller est suffisant pour de nombreuses applications, mais il présente quelques inconvénients parfaitement rédhibitoires.

Le premier inconvénient du générateur pseudo-aléatoire de Park et Miller est qu'il a une périodicité d'environ 2 milliards (exactement 2^31 moins 2). A la fin de chaque cycle d'environ 2 milliards de tirages, les mêmes valeurs reviennent dans le même ordre. Si ces valeurs sont utilisées pour sécuriser un système informatique, celui-ci est à la merci d'une attaque, dite « attaque en force », consistant à tester toutes les valeurs possibles (ce qui est à la portée de tout micro-ordinateur). La sécurité du système est alors équivalente à celle que fournirait une clé à 31 bits.

Le second inconvénient du générateur pseudo-aléatoire de Park et Miller est que ce générateur est parfaitement prévisible. La connaissance de la valeur du germe à un moment donné permet de prévoir parfaitement et avec précision les valeurs futures de ce germe et donc tous les nombres pseudo-aléatoires qui seront fournis par le générateur.

Dans le mode particulier de réalisation de l'invention présenté ici à titre d'exemple, plusieurs générateurs pseudo-aléatoires de Park et Miller fonctionnent conjointement. L'invention permet d'éviter les inconvénients évoqués habituels des générateurs de Park et Miller tels qu'ils sont classiquement utilisés. Le générateur objet de la présente invention, dans ce mode particulier de réalisation, se compose, entre autres, des éléments suivants :
- Un registre d'adressage sur 32 bits,
- Une troisième zone mémoire de 512 octets destinée à stocker des octets aléatoires,
- Un ensemble de 32 générateurs pseudo-aléatoires de Park et Miller, appelés, par la suite, générateurs pseudo-aléatoires élémentaires. Sur le plan matériel, chacun de ces 32 générateurs pseudo-aléatoires élémentaires dispose de 31 bits d'état, appelés bits d'états élémentaires. Ces générateurs élémentaires se partagent un coprocesseur spécifique unique conçu pour calculer, à partir d'un nombre à 31 bits fourni comme argument, le reste modulo 2^31 - 1 = 2 147 483 647 du produit par 7^5 = 16 807 de ce nombre fourni en argument.

Les bits d'état du générateur objet de la présente invention sont la réunion des bits d'état élémentaires de chacun des 32 générateurs pseudo-aléatoires élémentaires (soit 32 fois 31, donc au total 992 bits), des 32 bits du registre d'adressage et des 512 octets de la troisième zone mémoire.

Le générateur objet de la présente invention fournit à intervalles réguliers des octets pseudo-aléatoires, la fourniture de chaque nouvel octet pseudo-aléatoire se faisant au cours d'une itération qui réalise successivement les opérations suivantes : 5 bits particuliers du registre d'adressage spécifient quel est le générateur pseudo-aléatoire de Park et Miller particulier qui sera utilisé parmi les 32 générateurs pseudo-aléatoires élémentaires présents.

L'état de ce générateur pseudo-aléatoire particulier ainsi spécifié est un nombre à 31 bits, nombre qui est lu et fourni comme argument au coprocesseur spécifique. Ce coprocesseur fournit en résultat un nombre, appelé nombre candidat, qui est le reste modulo 2^31 - 1 = 2 147 483 647 du produit de cet argument par le nombre 7^5 = 16 807.

L'état du générateur pseudo-aléatoire particulier spécifié précédemment prend alors une valeur égale à celle du nombre candidat.

On utilise une partie des bits du nombre candidat et une partie des bits du registre d'adressage pour calculer un nombre à 9 bits qui spécifie une adresse dans la troisième zone mémoire.

L'octet de la troisième zone mémoire qui se trouve à l'adresse ainsi spécifiée est le nombre pseudo-aléatoire, résultat de l'itération en cours, nombre qui sera recopié dans la seconde zone mémoire du générateur objet de la présente invention, cette seconde zone mémoire étant destinée à stocker les résultats du générateur pseudo-aléatoire.

8 bits choisis parmi les 32 bits du nombre candidat forment un octet qui sera, par la suite, appelé octet candidat et qui viendra s'écrire dans la troisième zone mémoire à l'adresse précédemment spécifiée, donc à la place de l'octet qui avait été précédemment recopié dans la seconde zone mémoire.

Les 24 autres bits du nombre candidat sont utilisés pour modifier le registre d'adressage, cette modification consistant, d'une part, en l'application d'un opérateur XOR entre certains de ces bits et certains des bits du registre d'adressage et, d'autre part, en des permutations circulaires des bits du registre d'adressage.

Ceci termine l'itération en cours, et le générateur est prêt pour la prochaine itération.

On peut remarquer que la valeur de l'octet candidat résulte des valeurs d'un ensemble de 1024 bits qui sont, d'une part, les bits d'état élémentaires de chacun des 32 générateurs pseudo-aléatoires élémentaires (soit 32 fois 31, donc au total 992 bits) et, d'autre part, les 32 bits du registre d'adressage.

La connaissance des valeurs de ces 1024 bits permet non seulement de connaître l'octet candidat de l'itération en cours, mais toute la suite des octets candidats des itérations suivantes.

Les octets candidats sont recopiés dans la troisième zone mémoire, puis de là, par la suite, ils seront recopiés dans la seconde zone mémoire destinée à recueillir les octets pseudo-aléatoires résultats finaux du générateur objet de la présente invention. La partie du procédé, consistant à stocker provisoirement la valeur des octets candidats dans la troisième zone mémoire avant de les recopier, a pour effet de les mélanger. La suite des octets résultats finaux qui vont être écrits dans la seconde zone mémoire se compose des mêmes octets que la suite des octets candidats, mais dans un ordre différent. Les octets sont donc permutés avant d'être utilisés. Cette permutation a pour effet qu'il devient impossible, de retrouver, à partir des nombres pseudo-aléatoires successifs fournis par le générateur objet de la présente invention, d'en déduire directement des informations concernant l'état des générateurs pseudo-aléatoires élémentaires ou le registre d'adressage. La seule façon de reconstituer l'état interne du générateur objet de la présente invention, ou tout au moins les valeurs des 1024 bits permettant de reconstituer la suite des octets candidats successifs, consiste à procéder par essais et erreurs et à tester toutes les valeurs possibles de ces bits.

Par ailleurs, il résulte de la combinaison des traits techniques que le générateur, objet de la présente invention, dans sa variante de réalisation ci-dessus décrite, a, s'il fonctionne de façon autonome, sans perturbations, une périodicité supérieure à 2^500, ce qui est largement au-delà des besoins actuels et des besoins prévisibles pour les prochaines décennies en sécurité informatique.

De plus si ce générateur est perturbé de la façon décrite précédemment, il donne, pour des applications liées à la sécurité informatique, des résultats de qualité comparables à ceux que donnerait un générateur aléatoire physique basé sur un phénomène aléatoire pur.

Dans une variante particulière d'implémentation du mode de réalisation en cours de description, le générateur objet de la présente invention est réalisé au sein d'un circuit intégré comprenant d'autres composants, dont en particulier un processeur central, ces composants formant le système informatique pour les besoins duquel le générateur fournit des nombres pseudo-aléatoires. La conception même du circuit intégré fait qu'il est impossible d'obtenir une quelconque information sur la valeur des bits d'état du générateur objet de la présente invention, tant depuis l'extérieur du circuit intégré que depuis le système informatique implémenté sur le circuit intégré et utilisant les nombres pseudo-aléatoires fournis par le générateur. Les seules communications du générateur avec l'extérieur se font via une sortie unique qui permet au système informatique de lire les nombres contenus dans la seconde zone mémoire, et via une entrée unique qui permet de perturber les bits d'état du générateur pseudo-aléatoire en appliquant l'opérateur XOR entre ces bits d'état et des informations provenant d'une source externe au générateur, de sorte qu'il n'y a aucun moyen d'avoir une quelconque information sur les valeurs des bits d'état du générateur.

Le générateur fournit approximativement un octet pseudo-aléatoire toutes les 100 nanosecondes (donc dix millions d'octets pseudo-aléatoires par secondes). Les octets pseudo-aléatoires sont stockés dans la seconde zone mémoire et tenus à la disposition du système informatique qui y puisera selon ses besoins. Un octet pseudo-aléatoire, qui n'a pas été lu par ce système informatique avant la fourniture de l'octet suivant, sera effacé et remplacé par l'octet suivant. Compte tenu des vitesses de fonctionnement, d'une part, du générateur pseudo-aléatoire, d'autre part, du système informatique utilisant ces octets pseudo-aléatoires, ce dernier ne lit qu'exceptionnellement deux octets pseudo-aléatoires successifs. Les octets pseudo-aléatoires sont donc fournis de façon totalement asynchrone par rapport au système informatique qui les utilise, ce qui augmente le caractère aléatoire et imprévisible de ceux qui sont effectivement utilisés.

Dans cette variante particulière de réalisation de l'invention, le système informatique situé sur le circuit intégré comprend un bloc de cryptographie utilisant l'algorithme DES (Data Encryption Standard, adopté comme par les autorités américaines le 23 novembre 1976), appelé ci-après bloc DES.

A des intervalles non réguliers, le système informatique réalise sur le générateur pseudo-aléatoire une opération de perturbation consistant à lire des octets pseudo-aléatoires fournis par le générateur, à utiliser certains d'entre eux pour générer une clé de cryptage et d'autres pour générer une suite d'octets à crypter, à utiliser le bloc DES pour crypter cette suite d'octets à crypter en utilisant cette clé de cryptage. Le résultat de ce cryptage est une suite d'octets qui sera transmise au générateur pseudo-aléatoire et qui servira à modifier les bits d'état du générateur pseudo-aléatoire en appliquant un opérateur XOR entre ces bits d'état et le résultat du cryptage. Cette opération de perturbation est réalisée à intervalles non réguliers lorsque le processeur central du système informatique n'est pas occupé à d'autres tâches. Le temps total pour exécuter cette opération est de l'ordre de quelques millisecondes.

Nous allons montrer que le mode particulier de réalisation de l'invention décrit ci-dessus permet de fournir des nombres aléatoires adaptés à des applications visant à sécuriser un système informatique. Pour quantifier la notion de niveau de résistance d'un système à un type d'attaque donné, on définit une notion d'entropie liée au nombre moyen d'essais qu'un éventuel attaquant devra effectuer avant d'arriver à pénétrer le système par une attaque de ce type, ces essais étant effectués en prenant en compte les informations qui sont à la disposition de l'attaquant.

On dira que le système présente une entropie de n bits à un type donné d'attaque s'il faut au moyenne 2^n (2 puissance n) essais à un attaquant utilisant ce type d'attaque pour pénétrer le système. On considère qu'une entropie de 128 bits est largement suffisante pour assurer une sécurité parfaite à un type d'attaque donné, compte tenu de l'état des techniques ou prévisibles ces prochaines décennies. En effet le temps nécessaire à l'ensemble des ordinateurs de la planète, s'ils étaient utilisés conjointement pour mener à bien cette attaque, est significativement supérieur à l'âge de l'univers, même en tenant compte des augmentations des performances informatiques prévisibles pour les prochaines décennies.

Lors de la mise sous tension du générateur objet de la présente invention, dans le mode particulier de réalisation décrit ici, ou lors de sa réinitialisation suite à une coupure de courant, ou lors d'une attaque de type similaire, les bits d'état représentant l'état interne du générateur sont susceptibles de se retrouver dans un état connu. Le générateur réalise environ dix millions d'itérations par seconde. Si on connaît avec une précision parfaite le nombre d'itérations qui sépare l'initialisation ou la réinitialisation du générateur du moment où on utilise des nombres pseudo-aléatoires pour générer des clés de cryptage, et en l'absence de toute perturbation externe, on peut déterminer avec précision cette clé de cryptage. On considère néanmoins en pratique qu'il y a, sur ce nombre d'itérations, une imprécision de l'ordre de la racine carrée de ce nombre. Dans notre exemple 6,4 secondes après la réinitialisation, le nombre d'itération est d'environ 2^26. Si on admet que ce nombre est connu avec une précision de l'ordre de sa racine carrée, il faudra en moyenne 2^13 essais au pirate pour attaquer avec succès le système, c'est-à-dire retrouver les clés de cryptage. L'entropie à ce type d'attaque et donc de l'ordre de 13 bits ce qui est absolument insuffisant. Un an après la mise sous tension, il y aura eu environ 316 000 milliards d'itérations, soit environ 2^48, nombre qui peut être connu avec une précision de l'ordre de 2^24, soit une entropie de 24 bits, ce qui reste toujours absolument insuffisant.

Considérons maintenant une opération de perturbation qui est réalisée à un moment aléatoire, en fonction de l'activité du système informatique, elle-même liée à conditions extérieures telles que la charge du système ou le trafic sur un réseau informatique, et imaginons que l'attaquant puisse connaître avec une précision de l'ordre d'un dix millième de seconde le moment exact de la perturbation. Dans ces hypothèses il y a environ un millier de perturbations de ce type possibles (soit 2^10), selon les nombres aléatoires utilisés pour la perturbation (rappelons que les nombres aléatoires situés dans la seconde mémoire sont modifiés tous les dix-millionièmes de seconde). Une telle perturbation introduit alors environ dix bits d'entropie supplémentaire. Il suffit d'une douzaine de telles perturbations pour arriver à une entropie de 128 bits. En fonctionnement normal du circuit intégré, il peut y avoir plusieurs dizaines de perturbations de ce type par seconde. La sécurité du système à ce type d'attaque dépasse donc largement, après quelques secondes, tout ce qu'on pourrait souhaiter.

On va maintenant décrire, à titre d'exemple illustratif et non exhaustif, les figures qui représentent :
- figure 1 : un schéma représentant une variante de réalisation intégrant l'invention,
- figure 2 : un schéma représentant une autre variante de réalisation intégrant l'invention,
- figure 3 : un schéma représentant une autre variante de réalisation intégrant l'invention.
- figure 4: un schéma représentant une réalisation de l'invention.

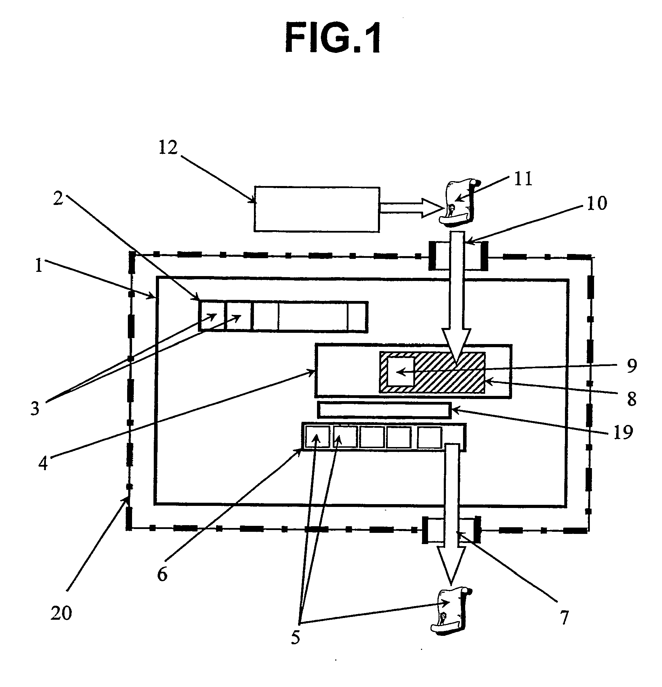

La figure 1 schématise le principe de l'invention, objet du présent brevet. Un générateur pseudo-aléatoire 1 se compose d'une première zone mémoire 2 destinée à stocker l'état interne du générateur 1, cet état interne étant représenté par les bits d'état 3. Une unité de calcul 4 effectue des opérations arithmétiques sur ces bits d'état 3 en vue, d'une part, de modifier ces bits d'état 3 et d'autre part de produire des nombres pseudo-aléatoires 5 qui sont, via des moyens de mémorisation 19, envoyés dans une seconde zone mémoire 6. Ces nombres pseudo-aléatoires 5 peuvent être lus depuis cette seconde zone mémoire 6 via une sortie unique 7. La sécurité du système est assurée par des moyens d'inhibition 20 qui empêchent toute opération qui permettrait, depuis l'extérieur, d'obtenir une quelconque information sur la valeur des bits d'état 3.

Ces bits d'état 3 peuvent cependant être modifiés à l'aide de moyens de calculs 8 situés dans l'unité de calcul 4 et comportant un opérateur XOR 9. Ces moyens de calcul 8 utilisent des données 11 fournies par une source extérieure 12 et lues via une entrée unique 10. Ils appliquent l'opérateur XOR 9 entre les données 11 et au moins une partie des bits d'état 3 en vue de modifier ces bits d'état 3. Notons bien que la connaissance des données 11 qui interviennent lors de l'application de l'opérateur XOR 9 ne fournit aucune information sur la valeur des bits d'état 3 que ce soit avant ou après la perturbation.

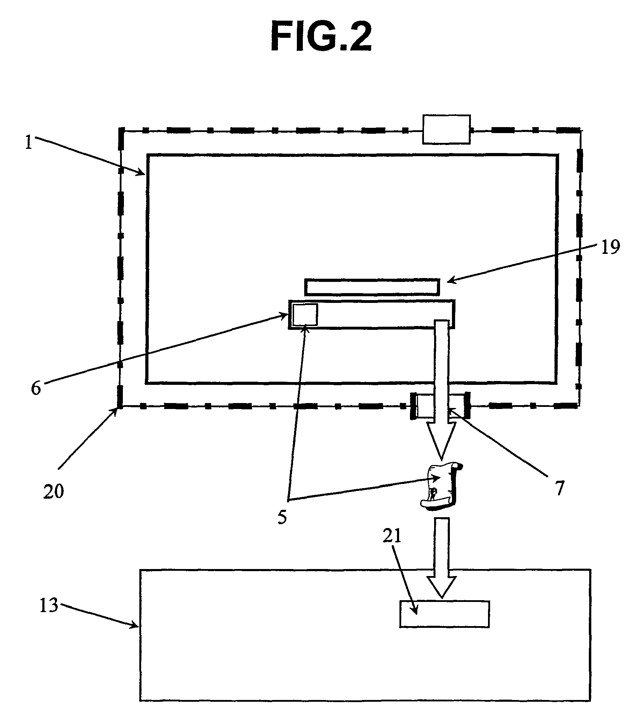

La figure 2 schématise la façon dont un générateur pseudo-aléatoire 1 similaire à celui de la figure 1, et protégé par ses moyens d'inhibition 20, peut être utilisé en vue de fournir des nombres aléatoires 5 à un système informatique 13. Ce système informatique 13 comporte des moyens de lecture 21 permettant de lire, via la sortie unique 7, ces nombres aléatoires 5 dans la seconde zone mémoire 6 du générateur 1, tels qu'ils y avaient été mémorisés par les moyens de mémorisation 19. La lecture des nombres aléatoires 5 est faite à fur et à mesure des besoins du système informatique 13, de manière asynchrone à leur production, accentuant ainsi le caractère aléatoire et imprévisible des nombres aléatoires fournis. Au fur et à mesure que de nouveaux nombres aléatoires 5 sont générés par le générateur 1, ils sont mémorisés dans la seconde zone mémoire 6 par les moyens de mémorisation 19, le nombre aléatoire produit le plus récemment venant se substituer au nombre aléatoire précédent, ce dernier étant définitivement oublié.

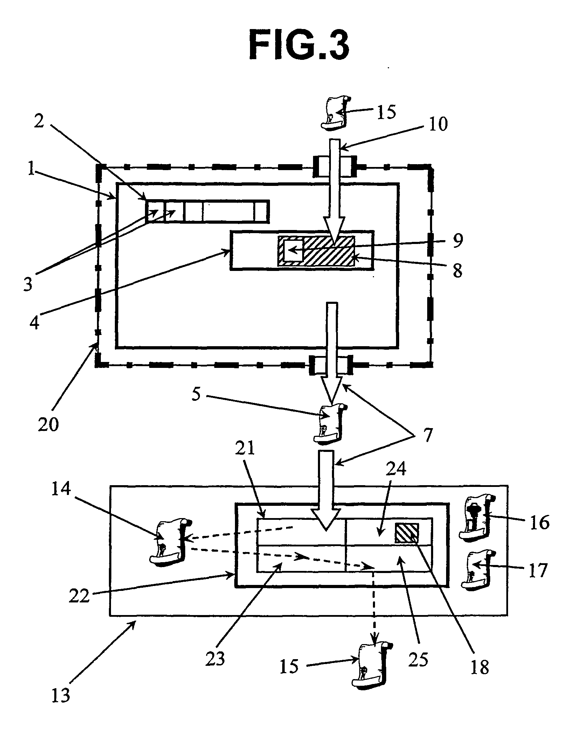

La figure 3 schématise la façon dont un générateur pseudo-aléatoire 1, similaire à celui des figures 1 et 2, et protégé par ses moyens d'inhibition 20, produisant des nombres aléatoires 5 pour les besoins d'un système informatique 13 peut être perturbé de façon intermittente, de façon à augmenter le caractère aléatoire et imprévisible des nombres pseudo-aléatoires 5 ainsi produits. Le système informatique 13 comprend des moyens de traitements informatiques 22. Ces moyens de traitement informatique 22 comprennent des moyens de lecture 21 qui lisent, via la sortie 7, des nombres aléatoires 5 fournis par le générateur pseudo-aléatoire 1, et les utilisent pour constituer une suite d'arguments 14. Les moyens de traitement informatique 22 comprennent aussi des seconds moyens de calcul 23 permettant de calculer, à partir des arguments 14, une suite de bits de perturbations 15 qui sont transmis, via les moyens de transmission 25 à l'entrée unique 10 du générateur pseudo-aléatoire 1. Cette entrée unique 10 les transmet aux premiers moyens de calcul 8 situés dans l'unité de calcul 4 du générateur pseudo-aléatoire 1. Ces moyens de calcul 8 utilisent ces bits de perturbations 15 pour modifier l'état du générateur en appliquant l'opérateur XOR 9 entre les bits de perturbations 15 et au moins une partie des bits d'état 3 situés dans la première zone mémoire 2.

Dans un mode particulier de réalisation, les bits de perturbation 15 sont calculés à partir de la suite d'arguments 14 à l'aide de moyens de cryptage 24 faisant partie des moyens de traitement informatique 22 et mettant en oeuvre un algorithme de cryptage 18 utilisant d'une part une clé de cryptage 16 et d'autre part des nombres à crypter 17, cette clé de cryptage 16 et ces nombres à crypter 17 étant spécifiés à partir d'une partie au moins des arguments 14.

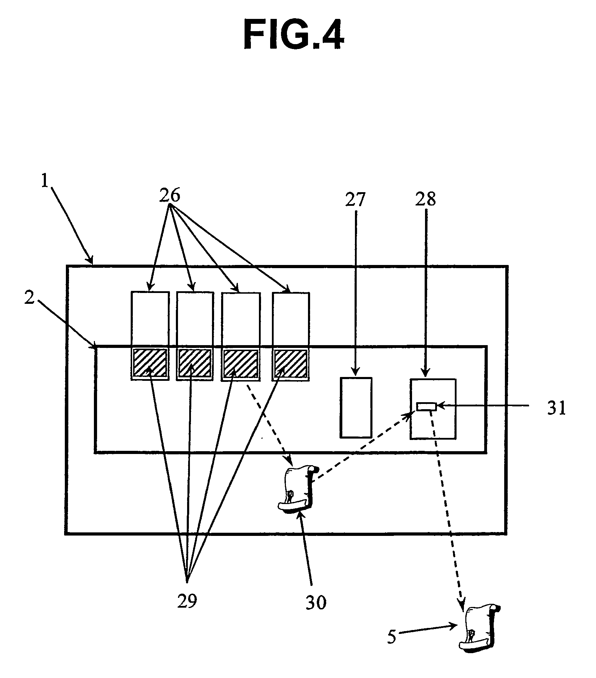

La figure 4 schématise une réalisation de l'invention dans laquelle le générateur pseudo-aléatoire 1 se compose lui-même de plusieurs générateurs pseudo-aléatoires élémentaires 26, d'un registre d'adressage 27 et d'une troisième zone mémoire 28. Chacun des générateurs pseudo-aléatoires élémentaires 26 comprend ses propres bits d'état dénommés bits d'états élémentaires 29. Les bits d'état du générateur 1 sont contenus dans la première zone mémoire 2 et sont constitués par la réunion du registre d'adressage 27, de la troisième zone mémoire 28 et des bits d'état élémentaires 29. Le registre d'adressage 27 contient, d'une part, des informations permettant de spécifier, parmi les générateurs pseudo-aléatoires élémentaires 26, celui qui sera utilisé pour fournir un nombre candidat 30, et d'autre part des informations permettant de spécifier une adresse 31 dans la troisième zone mémoire 2. C'est à cette adresse 31 qu'est lu le prochain nombre pseudo-aléatoire 5 fourni par le générateur pseudo-aléatoire 1. Après lecture de ce nombre 5 une partie des bits du nombre candidat 30, seront stockés à cette adresse 31. Par ailleurs une partie des bits du nombre candidat 30 sont utilisés pour modifier le registre d'adressage 27.

## Revendications

1. Procédé pour sécuriser un générateur (1) générant des nombres pseudo-aléatoires (5) ; ledit générateur (1) ayant un état interne qui le caractérise
ledit générateur (1) comprenant :
- une première zone mémoire (2) contenant des bits d'état (3), représentant l'état interne dudit générateur (1),
- une unité de calcul (4) effectuant des opérations arithmétiques sur lesdits bits d'état (3) pour produire lesdits nombres pseudo-aléatoires (5) et modifier lesdits bits d'état (3),
- une seconde zone mémoire (6) contenant lesdits nombres pseudo-aléatoires (5),
- une sortie unique (7) permettant de lire lesdits nombres pseudo-aléatoires (5) contenus dans ladite seconde zone mémoire (6),
ledit procédé comprenant l'étape d'inhiber de manière irréversible et inconditionnelle, notamment par des moyens logiques ét/ou mécaniques et/ou électroniques, la lecture et l'écriture desdits bits d'état (3) depuis l'extérieur dudit générateur (1), y compris via ladite sortie unique (7), ledit procédé étant **caractérisé en ce que** pour le procédé ledit générateur (1) comprend plusieurs générateurs pseudo-aléatoires élémentaires (26), un registre d'adressage (27) et une troisième zone mémoire (28), chacun desdits générateurs pseudo-aléatoires élémentaires (26) comprenant ses propres bits d'état dénommés bits d'états élémentaires (29), lesdits bits d'état (3) contenus dans ladites première zone mémoire (2) dudit générateur (1) étant constitués par la réunion dudit registre d'adressage (27), de ladite troisième zone mémoire (28) et desdits bits d'état élémentaires (29), et que
ledit procédé étant tel que la génération desdits nombres pseudo-aléatoires (5) par ledit générateur (1) comprend les étapes suivantes:
- l'étape d'extraire dudit registre d'adressage (27) des informations permettant de spécifier, parmi lesdits générateurs pseudo-aléatoires élémentaires (26), lequel d'entre eux sera utilisé lors de la prochaine itération dudit procédé,
- l'étape de faire fonctionner ledit générateur pseudo-aléatoire élémentaire spécifié à l'étape précédente pour en extraire un nombre ci-après dénommé le nombre candidat (30),
- l'étape d'extraire d'une partie des bits du registre d'adressage (27) et d'une partie des bits dudit nombre candidat (30) des informations permettant de spécifier une adresse (31) dans ladite troisième zone mémoire (28),
- l'étape de lire dans ladite troisième zone mémoire (28) le contenu de ladite adresse (31) spécifiée à l'étape précédente pour fournir lesdits nombres pseudo-aléatoires (5),
- l'étape de stocker à ladite adresse (31) précédemment spécifiée dans ladite troisième zone mémoire (28) une partie des bits dudit nombre candidat (30),
- l'étape d'utiliser une partie des bits dudit nombre candidat (30) pour modifier ledit registre d'adressage (27).

2. Procédé selon la revendication 1 ; ledit procédé étant plus particulièrement destiné à sécuriser un générateur (1) comprenant en outre des premiers moyens de calcul (8) comportant un opérateur XOR (9) et ayant une entrée unique (10) permettant d'entrer des données (11) provenant d'une source extérieure (12) audit générateur (1);
ledit procédé comprenant l'étape, pour lesdits premiers moyens de calcul (8), de modifier l'état desdits bits d'étal (3) en mettant en oeuvre ledit opérateur XOR (9) entre lesdites données (11) et au moins une partie desdits bits d'état (3);

3. Procédé selon l'une quelconque des revendications 1 ou 2 ; ledit générateur (1) produisant en permanence des nombres pseudo-aléatoires (5) pour les besoins d'un système informatique (13) et mémorisant dans ladite seconde zone mémoire (6) le dernier nombre pseudo-aléatoire produit en le substituant au nombre pseudo-aléatoire précédent ;
ledit procédé comprenant l'étape, pour ledit système informatique (13), de lire par intermittence dans ladite seconde zoné mémoire (6), via ladite sortie unique (7), lesdits nombres pseudo-aléatoires (5) de manière asynchrone par rapport à leur production;

4. Procédé selon l'une quelconque des revendications 2 ou 3; ledit générateur (1) produisant des nombres pseudo-aléatoires (5) pour les besoins d'un système informatique (13) ; ledit procédé comprenant en outre un algorithme mis en oeuvre, par intermittence, par ledit système informatique (13) ; ledit algorithme comportant les étapes suivantes:
- l'étape de lire une partie desdits nombres pseudo-aléatoires (5) produits par ledit générateur (1) pour constituer une suite d'arguments (14),
- l'étape de calculer une suite de bits de perturbation (15) en exécutant des opérations arithmétiques sur lesdits arguments (14),
- l'étape de modifier lesdits bits d'état (3) en mettant en oeuvre ledit opérateur XOR (9) entre ladite suite de bits de perturbation (15) et au moins une partie desdits bits d'état (3).

5. Procédé selon la revendication 4; ledit procédé étant tel que pour calculer ladite suite de bits de perturbation (15):
- on spécifie une clé de cryptage (16), notamment au moyen d'une partie desdits arguments (14),
- on spécifie une suite de nombres à crypter (17), notamment au moyen d'une partie desdits arguments (14),
- on met en oeuvre un algorithme de cryptage (18) pour produire, au moyen de ladite clé de cryptage (16) et de ladite suite de nombres à crypter (17), ladite suite de bits de perturbation (15).

6. Système pour sécuriser un générateur (1) générant des nombres pseudo-aléatoires (5); ledit générateur (1) ayant un état qui caractérise ayant un état interne qui le caractérise
ledit générateur (1) comprenant :
- une première zone mémoire (2) contenant des bits d'état (3), représentant l'état interne du générateur (1),
- une unité de calcul (4) effectuant des opérations arithmétiques sur lesdits bits d'état (3) pour produire lesdits nombres pseudo-aléatoires (5) et modifier lesdits bits d'état (3),
- des moyens de mémorisation (19) pour mémoriser lesdits nombres pseudo-aléatoires (5) dans une seconde zone mémoire (6),
- une sortie unique (7) permettant de lire lesdits nombres pseudo-aléatoires (5) contenus dans ladite seconde zone mémoire (6),
ledit système comprenant des moyens d'inhibition (20) pour inhiber de manière irréversible et inconditionnelle, notamment par des moyens logiques et/ou mécaniques et/ou électroniques, la lecture et l'écriture des bits d'état (3) depuis l'extérieur dudit générateur (1), y compris via ladite sortie unique (7)) ledit système étant **caractérisé en ce que** ledit générateur (1) comprend plusieurs générateurs pseudo-aléatoires élémentaires (26), un registre d'adressage (27) et une troisième zone mémoire (28), chacun desdits générateurs pseudo-aléatoires élémentaires (26) comprenant ses propres bits d'état dénommés bits d'états élémentaires (29), lesdits bits d'état (3) contenus dans ladite première zone mémoire (2) dudit générateur (1) étant constitués par la réunion dudit registre d'adressage (27), de ladite troisième zone mémoire (28) et desdits bits d'état élémentaires (29), et que
ledit générateur (1) comprend en outre des moyens de traitements informatiques permettant :
- d'extraire dudit registre d'adressage (27) des informations permettant de spécifier, parmi lesdits générateurs pseudo-aléatoires élémentaires (26), un générateur pseudo-aléatoire particulier,
- de faire fonctionner un générateur pseudo-aléatoire particulier pour fournir un nombre ci-après dénommé nombre candidat (30),
- d'extraire d'une partie des bits du registre d'adressage (27) et d'une partie des bits dudit nombre candidat (30), des informations permettant de spécifier une adresse (31) dans ladite troisième zone mémoire (28),
- de lire dans ladite troisième zone mémoire (28) le contenu de ladite adresse (31) pour fournir lesdits nombres pseudo-aléatoires (5),
- de stocker à ladite adresse (31) précédemment spécifiée dans ladite troisième zone mémoire (28) une partie des bits dudit nombre candidat (30),
- d'utiliser une partie des bits dudit nombre candidat (30) pour modifier ledit registre d'adressage (27).

7. Système selon la revendication 6 ; ledit générateur (1) comprenant en outre des premiers moyens de calcul (8) comportant un opérateur XOR (9) ; lesdits premiers moyens de calcul (8) ayant une entrée unique (10) permettant d'entrer des données (11) provenant d'une source extérieure (12) audit générateur (1) ; lesdits premiers moyens de calcul (8) permettant de modifier l'état desdits bits d'état (3) en mettant en oeuvre ledit opérateur XOR (9) entre lesdites données (11) et au moins une partie desdits bits d'état (3);

8. Système selon l'une quelconque des revendications 6 ou 7; ledit système comprenant un système informatique (13) ; ledit générateur (1) produisant en permanence des nombres pseudo-aléatoires (5) pour les besoins dudit système informatique (13) ; lesdits moyens de mémorisation (19) mémorisant dans ladite seconde zone mémoire (6) le dernier nombre pseudo-aléatoire produit et substituant ledit dernier nombre pseudo-aléatoire au nombre pseudo-aléatoire précédent ;
ledit système informatique (13) comprenant des moyens de lecture (21) connectés à ladite sortie unique (7) pour lire par intermittence dans ladite seconde zone mémoire (6), via ladite sortie unique (7), lesdits nombres pseudo-aléatoires (5) de manière asynchrone par rapport à leur production;

9. Système selon l'une quelconque des revendications 7 ou 8; ledit système comprenant un système informatique (13); ledit générateur (1) produisant des nombres pseudo-aléatoires (5) pour les besoins dudit système informatique (13) ; ledit système informatique (13) comprenant en outre des moyens de traitement informatique (22) mis en oeuvre par intermittence ; lesdits moyens de traitement informatique (22) comprenant :
- des moyens de lecture (21) connectés à ladite sortie unique (7) pour lire une partie desdits nombres pseudo-aléatoires (b) et pour constituer une suite d'arguments (14),
- des seconds moyens de calcul (23) pour calculer une suite de bits de perturbation (15) en exécutant des opérations arithmétique sur lesdits arguments (14),
- des moyens de transmission (25) pour transmettre lesdits bits de perturbation (15) auxdits premiers moyens de calcul (8) via la dite entrée unique (10) ;
lesdits premiers moyens de calcul (8) permettant de modifier lesdits bits d'état (3) en mettant en oeuvre ledit opérateur XOR (9) entre ladite suite de bits de perturbation (15) et au moins une partie desdits bits d'état (3).

10. Système selon la revendication 9 ; lesdits seconds moyens de calcul (23) calculant ladite suite de bits de perturbation (15):
- en spécifiant une clé de cryptage-(16), notamment au moyen d'une partie desdits arguments (14),
- en spécifiant une suite de nombres à crypter (17), notamment au moyen d'une partie desdits arguments (14),
- en mettant en oeuvre des moyens de cryptage (24) pour produire au moyen de ladite clé de cryptage (16) et ladite suite de nombres à crypter (17), ladite suite de bits de perturbation (15).

## Claims

1. A method for making secure a generator (1), generating pseudo-random numbers (5); the said generator (1) having an internal status characterising it;
the said generator (1) comprising:
- a first memory zone (2) containing status bits (3), representing the internal status of the said generator (1),
- a calculation unit (4) performing arithmetic processes on the said status bits (3) in order to produce the said pseudo-random numbers (5) and to modify the said status bits (3),
- a second memory zone (6) containing the said pseudo-random numbers (5),
- a sole output (7) enabling to read the said pseudo-random numbers (5) contained inside the said second memory zone (6),
the said method includes the step for irreversibly and unconditionally inhibiting, notably through logical and/or mechanical and/or electronic means, the reading and the writing of the said status bits (3) from the outside of the said generator (1), including via the said sole output (7), the said method being **characterised** as such for this method the said generator (1) includes several elementary pseudo-random generators (26), an addressing register (27) and a third memory zone (28), each one of the said elementary pseudo-random generators (26) comprising its own status bits referred to as elementary status bits (29), the said status bits (3) contained inside the said first memory zone (2) of the said generator (1) being constituted by the grouping of the said addressing register (27), the said third memory zone (28) and the said elementary status bits (29); and that the said method being such that the generation of the said pseudo-random numbers (5) by the said generator (1) comprises the following steps:
- the step for extracting, from the said addressing register (27), information enabling to specify, from among the said elementary pseudo-random generators (26), which, one among them will be used during the next iteration of the said method,
- the step for making the said elementary pseudo-random generator, specified in the previous step, extract a number, hereafter referred to as the candidate number (30),
- the step for extracting, from a part of the bits in the addressing register (27) and from a part of the bits in the said candidate number (30), information enabling to specify an address (31) inside the said third memory zone (28),
- the step for reading inside the said third memory zone (28) the contents of the said address (31) specified in the previous step for the purpose of supplying the said pseudo-random numbers (5),
- the step for stocking a part of the bits of the said candidate number (30) in the said previously specified address (31) inside the said third memory zone (28),
- the step for using a part of the bits in the said candidate number (30) in order to modify the said addressing register (27).

2. A method according to claim 1; the said method more specifically having the purpose of making a generator (1) secure, further including the first calculating means (8) comprising an XOR operator (9) and having a sole input (10) enabling to input data (11) originating from a source (12) outside of the generator (1);
the said method comprising the step, for the said calculating means (8), for modifying the status of the said status bits (3), by implementing the said XOR operator (9) between the said data (11) and at least one part of the said status bits (3).

3. A method according any one of the claims 1 or 2; the said generator (1) permanently producing pseudo-random numbers (5) for the needs of a computer system (13) and memorising inside the said second memory zone (6) the last pseudo-random number produced, by substituting it to the previous pseudo-random number;
the said method comprising the step, for the said computer system (13), for intermittently reading inside the said second memory zone (6), via the said sole output (7), the said pseudo-random numbers (5) in an asynchronous manner in relation to their production.

4. A method according any one of the claims 2 or 3; the said generator (1) producing pseudo-random numbers (5) for the needs of a computer system (13); the said method further comprising an algorithm intermittently implemented by the said computer system (13); the said algorithm comprising the following steps:
- the step for reading a part of the said pseudo-random numbers (5) produced by the said generator (1) in order to constitute a succession of arguments (14),
- the step for calculating a succession of perturbation bits (15) by performing arithmetic operations on the said arguments (14),
- the step for modifying the said status bits (3) by implementing the said XOR operator (9) between the said succession of perturbation bits (15) and at least one part of the said status bits (3).

5. A method according to claim 4; the said method being such that, in order to calculate the said succession of perturbation bits (15):
- an encryption key (16) is specified, notably using a part of the said arguments (14),
- a succession of numbers for encryption (17) is specified, notably using a part of the said arguments (14),
- an encryption algorithm (18) is implemented in order to produce, using the said encryption key (16) and the said succession of numbers for encryption (17), the said succession of perturbation bits (15).

6. A system for making secure a generator (1), generating pseudo-random numbers (5); the said generator (1) having an internal status characterising it;
the said generator (1) comprising:
- a first memory zone (2) containing status bits (3), representing the internal status of the generator (1),
- a calculation unit (4) performing arithmetic processes on the said status bits (3) in order to produce the said pseudo-random numbers (5) and to modify the said status bits (3),
- means for memorising (19) in order to memorise the said pseudo-random numbers (5) inside a second memory zone (6),
- a sole output (7) enabling to read the said pseudo-random numbers (5) contained inside the said second memory zone (6),
the said system comprises means of inhibition (20) in order to irreversibly and unconditionally inhibit, notably by logical and/or mechanical and/or electronic means, the reading and the writing of the status bits (3) from the outside of the said generator (1), including via the said sole output (7),
the said system being **characterised in that** the said generator (1) comprises several elementary pseudo-random numbers (26), an addressing register (27) and a third memory zone (28), each one of the said elementary pseudo-random numbers (26) comprising its own status bits referred to as elementary status bits (29), the said status bits (3) contained inside the said first memory zone (2) of the said generator (1) being constituted by the grouping of the said addressing register (27), the said third memory zone (28) and the said elementary status bits (29); and that the said generator (1) further comprises computer processing means enabling:
- to extract, from the said addressing register (27), information enabling to specify, from among the said elementary pseudo-random generators (26), a specific pseudo-random generator,
- to make a specific pseudo-random generator operate for the purpose of supplying the said candidate number (30),
- to extract, from a part of the bits in the addressing register (27) and from a part of the bits in the said candidate number (30), information enabling to specify an address (31) inside the said third memory zone (28),
- to read inside the said third memory zone (28) the contents of the said address (31) in order to supply the said pseudo-random numbers (5),
- to stock a part of the bits of the said candidate number (30) in the said previously specified address (31) inside the said third memory zone (28),
- to use a part of the bits of the said candidate number (30) in order to modify the said addressing register (27).

7. A system according to claim 6; the said generator (1) further including the first calculating means (8) comprising an XOR operator (9); the said first calculating means (8) having a sole input (10) enabling to input data (11) originating from a source (12) outside of the said generator (1); the said first calculating means (8) enabling to modify the status of the said status bits (3) by implementing the said XOR operator (9) between the said data (11) and at least one part of the said status bits (3).

8. A method according any one of the claims 6 or 7; the said system comprising a computer system (13); the said generator (1) permanently producing pseudo-random numbers (5) for the needs of the said computer system (13); the said memorising means (19) memorising inside the said second memory zone (6) the last pseudo-random number produced and substituting the said last pseudo-random number to the previous pseudo-random number;
the said computer system (13) comprising means for reading (21) connected to the said sole output (7) in order to read intermittently inside the second memory zone (6), via the said sole output (7), the said pseudo-random numbers (5) in an asynchronous manner in relation to their production.

9. A system according to any one of the claims 7 or 8; the said system comprising a computer system (13); the said generator (1) producing pseudo-random numbers (5) for the needs of a computer system (13); the said computer system (13) further comprising data-processing means (22) intermittently implemented; the said data-processing means (22) comprising:
- means for reading (21), connected to the said sole output (7), for the purpose of reading a part of the said pseudo-random numbers (5) and for constituting a succession of arguments (14),
- second calculating means (23) for the purpose of calculating a succession of perturbation bits (15) by performing arithmetic processes on the said arguments (14),
- transmission means (25) for the purpose of transmitting the said perturbation bits (15) to the said first calculation means (8) via the said sole input (10);
the said first calculating means (8) enabling to modify the said status bits (3) by implementing the said XOR operator (9) in between the said succession of perturbation bits (15) and at least one part of the said status bits (3).

10. A method according to claim 10; the said second calculating means (23) calculating the said succession of perturbation bits (15):
- by specifying an encryption key (16), notably using a part of the said arguments (14),
- by specifying a succession of numbers to be encrypted (17), notably using a part of the said arguments (14),
- by implementing encryption means (24) in order to produce, using the said encryption key (16) and the said succession of numbers to be encrypted (17), the said succession of perturbation bits (15).

## Patentansprüche

1. Verfahren zur Sicherung eines Generators (1) zur Generierung von Pseudozufallszahlen (5); der besagte Generator (1) verfügt dabei über einen internen Status, der ihn kennzeichnet.
Der besagte Generator (1) enthält:
- einen ersten Speicherbereich (2) mit Statusbits (3), die den internen Status des Generators (1) darstellen,
- eine Berechnungseinheit (4), die arithmetische Operationen mit den besagten Statusbits (3) durchführt, um die besagten Pseudozufallszahlen (5) zu produzieren und die besagten Statusbits (3) zu verändern,
- einen zweiten Speicherbereich (6), der die besagten Pseudozufallszahlen (5) enthält,
- einen einzigen Ausgang (7) über den die besagten Pseudozufallszahlen (5), die sich im zweiten Speicherbereich (6) befinden, ausgelesen werden können,
das besagte Verfahren enthält dabei den Schritt zur unwiderruflichen und bedingungslosen Unterbindung, speziell durch logische und/ oder mechanische und/ oder elektronische Mittel des Lesens und Schreibens der besagten Statusbits (3) von außerhalb des besagten Generators (1), auch über den besagten einzigen Ausgang (7), wobei das besagte Verfahren **dadurch gekennzeichnet ist, dass** der besagte Generator (1) für dieses Verfahren mehrere elementare Pseudozufallsgeneratoren (26), ein Adressierungsregister (27) und einen dritten Speicherbereich (28) enthält, wobei jeder der genannten elementaren Pseudozufallsgeneratoren (26) seine eigenen Statusbits enthält, die elementare Statusbits (29) genannt werden, wobei die besagten Statusbits (3), die im besagten ersten Speicherbereich (2) des besagten Generators (1) enthalten sind, durch die Vereinigung des besagten Adressierungsregisters (27), des besagten dritten Speicherbereiches (28) und der besagten elementaren Statusbits (29) erstellt werden, und dass das besagten Verfahren so ausgelegt ist, dass die Generierung der besagten Pseudozufallszahlen (5) durch den besagten Generator (1) aus folgenden beiden Schritten besteht
- aus dem Schritt der Entnahme von Informationen aus dem besagten Adressierungsregister (27), mit denen festgelegt werden kann, welcher der besagten elementaren Pseudozufallsgeneratoren (26) bei der nächsten Iteration des besagten Verfahrens verwendet werden wird,
- aus dem Schritt des Betriebs des besagten elementaren Pseudozufallsgenerators, der im vorherigen Schritt festgelegt wurde, um daraus eine Zahl zu entnehmen, die nachfolgend die Kandidatenzahl (30) genannt wird,
- aus dem Schritt der Entnahme aus einem Teil der Bits aus dem Adressierungsregisters (27) und einem Teil der Bits der besagten Kandidatenzahl (30) von Informationen, mit denen eine Adresse (31) im besagten dritten Speicherbereich (28) festgelegt werden kann,
- aus dem Schritt des Lesens im dritten Speicherbereich (28) des Inhalts der besagten Adresse (31), die im vorherigen Schritt festgelegt wurde, um die besagten Pseudozufallszahlen (5) zu liefern,
- aus dem Schritt des Ablegens auf der besagten Adresse (31), die zuvor im dritten Speicherbereich (28) festgelegt wurde, eines Teils der Bits der besagten Kandidatenzahl (30),
- aus dem Schritt der Verwendung eines Teils der Bits der besagten Kandidatenzahl (30) zum Verändern des besagten Adressierungsregisters (27).

2. Verfahren nach Anspruch 1; das besagte Verfahren ist dabei speziell dazu bestimmt, einen Generator (1) zu sichern, der über die ersten Berechnungsmittel (8) hinaus, einen XOR Operator (9) enthält, und über einen einzigen Eingang (10) verfügt, über den Daten (11) eingegeben werden können, die aus einer für den Generator (1) externen Quelle (12) stammen;
das besagte Verfahren enthält dabei den Schritt für die besagten ersten Berechnungsmittel (8), den Status der besagten Statusbits (3) unter Anwendung des besagten XOR Operators (9) zwischen den besagten Daten (11) und zumindest eines Teils der besagten Statusbits (3) zu verändern;

3. Verfahren nach irgendeinem der Ansprüche 1 oder 2; der besagte Generator (1) produziert dabei andauernd Pseudozufallszahlen (5) für die Bedürfnisse eines Informatiksystems (13), und speichert dabei im besagten zweiten Speicherbereich (6) die zuletzt produzierte Pseudozufallszahl ab, indem er sie an die Stelle der vorherigen Pseudozufallszahl setzt;
das besagte Verfahren enthält dabei den Schritt für das besagte Informatiksystem (13), das abwechselnde Lesen im zweiten Speicherbereich (6) über den besagten einzigen Ausgang (7) der besagten Pseudozufallszahlen (5) in asynchroner Art und Weise im Verhältnis zu deren Erzeugung;

4. Verfahren nach irgendeinem der Ansprüche 2 oder 3; der besagte Generator (1) produziert dabei Pseudozufallszahlen (5) für die Bedürfnisse eines Informatiksystems (13); das besagte Verfahren enthält dabei darüber hinaus einen vom Informatiksystem (13) abwechselnd angewandten Algorithmus; der besagte Algorithmus enthält dabei die folgenden Schritte:
- den Schritt des Lesens eines Teils der besagten Pseudozufallszahlen (5), die vom besagten Generator (1) produziert werden, um eine Argumentreihe (14) zu bilden,
- den Schritt der Berechnung einer Reihe von Störbits (15) durch Ausführung der arithmetischen Operationen mit den besagten Argumenten (14),
- den Schritt der Veränderung der besagten Statusbits (3) durch Anwendung des besagten XOR Operators (9) zwischen der besagten Reihe an Störbits (15) und zumindest einem Teil der besagten Statusbits (3).

5. Verfahren nach Anspruch 4; das besagte Verfahren ist dabei so ausgelegt, dass man zur Berechnung der besagten Reihe an Störbits (15):
- einen Kodierschlüssel (16) festlegt, speziell anhand eines Teils der besagten Argumente (14),
- eine Reihe an zu verschlüsselnden Zahlen (17) festlegt, speziell anhand eines Teils der besagten Argumente (14),
- einen Verschlüsselungsalgorithmus (18) anwendet, zur Erzeugung der besagten Reihe an Störbits (15) mithilfe des besagten Kodierschlüssels (16) und der besagten Reihe an zu verschlüsselnden Zahlen (17).

6. System zur Sicherung eines Generators (1) zur Generierung von Pseudozufallszahlen (5); der besagte Generator (1) verfügt dabei über einen internen Status, der ihn kennzeichnet
der besagte Generator (1) enthält
- einen ersten Speicherbereich (2) mit Statusbits (3), die den internen Status des Generators (1) darstellen,
- eine Berechnungseinheit (4), die arithmetische Operationen mit den besagten Statusbits (3) durchführt, um die besagten Pseudozufallszahlen (5) zu erzeugen, und die besagten Statusbits (3) zu verändern,
- Speichermittel (19) zum Speichern der besagten Pseudozufallszahlen (5) in einem zweiten Speicherbereich (6),
- einen einzigen Ausgang (7) über den die besagten Pseudozufallszahlen (5), die sich im zweiten Speicherbereich (6) befinden, ausgelesen werden können,
das besagte System enthält dabei Unterbindungsmittel (20) zur unwiderruflichen und bedingungslosen Unterbindung, speziell durch logische und/ oder mechanische und/oder elektronische Mittel des Lesens und Schreibens der besagten Statusbits (3) von außerhalb des besagten Generators (1), auch über den besagten einzigen Ausgang (7), wobei das besagte Verfahren **dadurch gekennzeichnet ist, dass** der besagte Generator (1) für dieses Verfahren mehrere elementare Pseudozufallsgeneratoren (26), ein Adressierungsregister (27) und einen dritten Speicherbereich (28) enthält, wobei jeder der genannten elementaren Pseudozufallsgeneratoren (26) seine eigenen Statusbits enthält, die elementare Statusbits (29) genannt werden, wobei die besagten Statusbits (3), die im besagten ersten Speicherbereich (2) des besagten Generators (1) enthalten sind, durch die Vereinigung des besagten Adressierungsregisters (27), des besagten dritten Speicherbereiches (28) und der besagten elementaren Statusbits (29) erstellt werden, und dass
der besagte Generator (1) darüber hinaus über Mittel zur EDV Bearbeitung verfügt, anhand derer.
- Informationen aus dem besagten Adressierungsregister (27) entnommen werden können, mit denen unter den besagten elementaren Pseudozufallsgeneratoren (26) ein besonderer Pseudozufallsgenerator festgelegt werden kann,
- ein besonderer Pseudozufallsgenerator betrieben werden kann, um eine Zahl zu liefern, die nachfolgend Kandidatenzahl (30) genannt wird,
- aus einem Teil der Bits des Adressierungsregisters (27) und aus einem Teil der Bits der besagten Kandidatenzahl (30) Informationen entnommen werden können, anhand derer eine Adresse (31) im besagten dritten Speicherbereich (28) festgelegt werden kann,
- im besagten dritten Speicherbereich (28) der Inhalt der besagten Adresse (31) gelesen werde kann, um die besagten Pseudozufallszahlen (5) zu liefern,
- in der besagten Adresse (31) die zuvor im dritten Speicherbereich (28) festgelegt wurde, ein Teil der Bits der besagten Kandidatenzahl (30) abgelegt werden kann,
- ein Teil der Bits der besagten Kandidatenzahl (30) verwendet wird, um das besagten Adressierregister (27) zu verändern.

7. System nach Anspruch 6; der besagte Generator (1) enthält dabei darüber hinaus erste Berechnungsmittel (8), die einen XOR Operator (9) enthalten; die besagten ersten Berechnungsmittel (8) verfügen über einen einzigen Eingang (10), über den Daten (11) eingegeben werden können, die aus einer für den Generator (1) externen Quelle (12) stammen; die besagten ersten Berechnungsmittel (8) ermöglichen dabei die Veränderung des Status der besagten Statusbits (3) durch die Anwendung des besagten XOR Operators (9) zwischen den besagten Daten (11) und zumindest einem Teil der besagten Statusbits (3);

8. System nach irgendeinem der Ansprüche 6 oder 7; das besagte System enthält dabei ein Informatiksystem (13); der besagte Generator (1) produziert dabei andauernd Pseudozufallszahlen (5) für die Bedürfnisse des besagten Informatiksystems (13); die besagten Speichermittel (19) speichern dabei die zuletzt produzierte Pseudozufallszahl im besagten zweiten Speicherbereich (6) ab, indem es die besagte letzte Pseudozufallszahl an die Stelle der vorherigen Pseudozufallszähl setzt;
das besagte Informatiksystem (13) enthält dabei Lesemittel (21), die mit dem besagten einzigen Ausgang (7) verbunden sind, um abwechselnd die besagten Pseudozufallszahlen (5) asynchron im Verhältnis zu ihrer Erzeugung im besagten zweiten Speicherbereich (6) über den besagten einzigen Ausgang (7) zu lesen;

9. System nach irgendeinem der Ansprüche 7 oder 8; das besagte System enthält dabei ein Informatiksystem (13); der besagte Generator (1) produziert Pseudozufallszahlen (5) für die Bedürfnisse des besagten Informatiksystems (13); das besagte Informatiksystem (13) enthält dabei darüber hinaus Mittel zur EDV Bearbeitung (22), die abwechselnd angewandt werden; die besagten EDV Bearbeitungsmittel (22) enthalten dabei:
- Lesemittel (21), die mit dem besagten einzigen Ausgang (7) verbunden sind, um einen Teil der besagten Pseudozufallszahlen (5) zu lesen, und zur Bildung einer Argumentreihe (14),
- zweite Berechnungsmittel (23) zur Berechnung einer Reihe von Störbits (15) durch Ausführung von arithmetischen Operationen mit den besagten Argumenten (14),
- Übertragungsmittel (25) zum Übertragen der besagten Störbits (15) zu den ersten Berechnungsmitteln (8) über den besagten einzigen Eingang (10);
die besagten ersten Berechnungsmittel (8) ermöglichen eine Veränderung der besagten Statusbits (3) durch Anwendung des besagten XOR Operators (9) zwischen der besagten Reihe an Störbits (15) und zumindest einem Teil der besagten Statusbits (3).

10. System nach Anspruch 9; die besagten zweiten Berechnungsmittel (23) berechnen dabei die besagte Reihe an Störbits (15):
- durch Festlegung eines Kodierschlüssels (16), speziell anhand eines Teils der besagten Argumente (14),
- durch Festlegung einer Reihe an zu verschlüsselnden Zahlen (17), speziell anhand eines Teils der besagten Argumente (14),
- durch die Anwendung der Verschlüsselungsmittel (24) zur Erzeugung der besagten Reihe an Störbits (15) anhand des besagten Kodierschlüssels (16) und der besagten Reihe an zu verschlüsselnden Zahlen (17).
